# EUROPÄISCHE PATENTANMELDUNG

(11) **EP 4 480 644 A1**
(43) Veröffentlichungstag der Anmeldung: **25.12.2024**
(21) Anmeldenummer: 24183384.7
(22) Anmeldetag: 20.06.2024
(51) Int. Cl.: B25J 9/10, B25J 9/12, B25J 17/00, B25J 19/00, B25J 9/04

(54) **MOTORISIERTES GELENK FÜR EINEN PROGRAMMIERBAREN BEWEGUNGSAUTOMATEN**

(30) Priorität: 21.06.2023 LU 504567
(71) Anmelder: Ovalo GmbH, 65555 Limburg (DE)
(72) Erfinder: Jung, Mario, 65554 Ahlbach (DE)
(74) Vertreter: Hoffmann, Jürgen

(57) **Zusammenfassung**

Die Erfindung betrifft ein motorisiertes Gelenk zum Verbinden von zwei relativ zueinander beweglichen Trägern eines programmierbaren Bewegungsautomaten, das einen Aktuator mit einem Antriebsmotor, mit einem Spannungswellengetriebe, das dem Antriebsmotor triebtechnisch nachgeschaltet ist, und mit einer schaltbaren Feststellvorrichtung, die dazu ausgebildet und angeordnet ist, im zugeschalteten Zustand ein zum Antriebsstrang des Aktuators gehörendes Bauteil zu arretieren und in einem Freigabezustand nicht zu arretieren, aufweist, wobei eine Federvorrichtung vorhanden ist, die im zugeschalteten Zustand eine Bewegung des arretierten Bauteils gegen eine Rückstellkraft und/oder gegen ein Rückstellmoment zulässt. Das motorisierte Gelenk zeichnet sich dadurch aus, dass die Feststellvorrichtung über die Federvorrichtung mit dem zu arretierenden Bauteil verbunden ist, wobei die Feststellvorrichtung ein Formschlussmittel, welches im zugeschalteten Zustand in formschlüssigem Eingriff mit einem Gegenformschlussmittel steht, und ein Sperrmittel, das das Formschlussmittel oder das Gegenformschlussmittel aufweist, oder wobei die Feststellvorrichtung als reibschlüssige Bremse ausgebildet ist oder eine reibschlüssige Bremse aufweist.

## Beschreibung

Die Erfindung betrifft ein motorisiertes Gelenk zum Verbinden von zwei relativ zueinander beweglichen Trägern eines programmierbaren Bewegungsautomaten, das einen Aktuator mit einem Antriebsmotor, mit einem Spannungswellengetriebe, das dem Antriebsmotor triebtechnisch nachgeschaltet ist, und mit einer schaltbaren Feststellvorrichtung, die dazu ausgebildet und angeordnet ist, im zugeschalteten Zustand ein zum Antriebsstrang des Aktuators gehörendes Bauteil zu arretieren und in einem Freigabezustand nicht zu arretieren, aufweist, wobei eine Federvorrichtung vorhanden ist, die im zugeschalteten Zustand eine Bewegung des arretierten Bauteils gegen eine Rückstellkraft und/oder gegen ein Rückstellmoment zulässt.

Die Erfindung betrifft außerdem einen Aktuator für ein solches motorisiertes Gelenk.

Die Erfindung betrifft darüber hinaus einen programmierbaren Bewegungsautomaten mit einem solchen motorisierten Gelenk.

Ein motorisiertes Gelenk der eingangs genannten Art ist beispielsweise aus der internationalen Patentanmeldung WO 2017 186 844 A1 bekannt. Ein solches motorisiertes Gelenk hat den Nachteil, dass die Träger des programmierbaren Bewegungsautomaten, die über das motorisierte Gelenk miteinander verbunden sind, relativ zueinander vollkommen unbeweglich sind, wenn die Feststellvorrichtung in den zugeschalteten Zustand geschaltet ist. Um beispielsweise nach einer Notabschaltung, bei der die Feststellvorrichtung in den zugeschalteten Zustand geschaltet wurde, einen versehentlich eingeklemmten Gegenstand oder eine versehentlich eingeklemmte Person kurzfristig befreien zu können, ist es notwendig, zunächst die Feststellvorrichtung in den Freigabezustand zurückzuschalten, was jedoch voraussetzt, dass zuvor für eine externe Abstützung der Träger gesorgt wird.

Aus dem Artikel CHEN YANLIN et al., "Novel torsional spring with corrugated flexible units for series elastic actuators for cooperative robots", Journal of Medical Science an Technology 36 (6) 2022, Seiten 3131-3142, ist eine flache Torsionsfeder mit gewellten flexiblen Einheiten für serielle elastische Aktuatoren (SEA) für kooperative Roboter bekannt. Die Torsionsfeder ist für den Einsatz in SEAs konzipiert, die in kooperativen Robotern (Roboter, die in enger Interaktion mit Menschen arbeiten) verwendet werden.

Aus der US-Patentanmeldung 2018/0215050 A1 ist eine Gelenkanordnung für einen Roboter bekannt. Die Gelenkanordnung beinhaltet ein Gehäuse, das mit einem Ausgangsteil verbunden ist. Die Gelenkanordnung beinhaltet außerdem ein System mit einem Spannungswellengetriebe mit einem Wellengenerator, einer flexiblen Verzahnung und einer kreisförmigen Verzahnung, die mit dem Ausgangsteil verbunden ist, wobei der Wellengenerator durch eine Rotorwelle in Drehung versetzt wird. Die Rotorwelle wird durch einen Elektromotor angetrieben, der einen Stator und einen Rotormagneten umfasst, wobei der Rotormagnet an der Rotorwelle befestigt ist. Die Gelenkanordnung weist eine Rotorbremse auf, die dazu ausgebildet ist, eine Relativbewegung zwischen der Rotorwelle und der flexiblen Verzahnung zu stoppen. Die Gelenkanordnung weist außerdem eine Ausgangsbremse auf, die dazu ausgebildet ist, die Drehung des Ausgangsteils zu stoppen.

Es ist daher die Aufgabe der vorliegenden Erfindung, ein motorisiertes Gelenk anzugeben, dass es ermöglicht, nach einem Umschalten der Feststellvorrichtung in den zugeschalteten Zustand schnell und unkompliziert Eingriffe an einem mit dem motorisierten Gelenk ausgerüsteten programmierbaren Bewegungsautomaten vornehmen zu können.

Diese Aufgabe wird durch ein motorisiertes Gelenk der eingangs genannten Art gelöst, das dadurch gekennzeichnet ist, dass die Feststellvorrichtung über die Federvorrichtung mit dem zu arretierenden Bauteil verbunden ist, wobei die Feststellvorrichtung ein Formschlussmittel, welches im zugeschalteten Zustand in formschlüssigem Eingriff mit einem Gegenformschlussmittel steht, und ein Sperrmittel, das das Formschlussmittel oder das Gegenformschlussmittel aufweist, oder wobei die Feststellvorrichtung als reibschlüssige Bremse ausgebildet ist oder eine reibschlüssige Bremse aufweist.

Die Erfindung hat den ganz besonderen Vorteil, dass die Träger eines programmierbaren Bewegungsautomaten, die mittels des erfindungsgemäßen motorisierten Gelenks miteinander verbunden sind, auch nach einem Umschalten der Feststellvorrichtung in den zugeschalteten Zustand durch Aufwendung einer äußeren Kraft in begrenztem Umfang relativ zueinander beschädigungsfrei elastisch bewegt werden können, beispielsweise um Gegenstände, die versehentlich von dem programmierbaren Bewegungsautomaten eingeklemmt wurden, unkompliziert befreien zu können.

Vorzugsweise weist die Federvorrichtung eine geringere Steifigkeit auf, als die sich im Antriebsstrang des Aktuators befindlichen Bauteile. Auf diese Weise wird vorteilhaft erreicht, dass die übrigen Bauteile im Antriebsstrang des Aktuators durch die Federvorrichtung vor einer Beschädigung durch übermäßige äußere Krafteinwirkung geschützt werden.

Die Erfindung hat den zusätzlichen Nebenvorteil, dass die Bauteile des Aktuators bei einem Umschalten der Feststellvorrichtung in den zugeschalteten Zustand vor hohen Belastungsspitzen geschützt sind, weil ein Teil der aufgrund der Massenträgheit der Träger vorhandenen kinetischen Energie unmittelbar nach dem Herstellen des zugeschalteten Zustandes (beispielsweise indem ein Sperrenstift in eine Ausnehmung eines zu arretierenden Bauteils eingreift) zunächst von der Federvorrichtung in Form von Spannenergie aufgenommen wird.

Hinsichtlich der Ausführung der Federvorrichtung gibt es keine grundsätzlichen Beschränkungen. Die Federvorrichtung kann vorteilhaft wenigstens teilweise aus Stahl, insbesondere aus Federstahl, gefertigt sein. Eine solche Ausführung hat den Vorteil, dass sie ganz besonders langlebig und robust ausgebildet werden kann.

Alternativ oder zusätzlich kann vorteilhaft vorgesehen sein, dass die Federvorrichtung wenigstens teilweise aus Kunststoff, insbesondere aus einem Elastomer-Kunststoff, gefertigt ist. Die Verwendung eines Elastomer-Kunststoffs hat den ganz besonderen Vorteil, dass außer einer Elastizität der Federvorrichtung in einfacher Weise zusätzlich auch eine Dämpfung, durch Umsetzung eines Teils der eingetragenen Energie in Wärmeenergie innerhalb des Elastomer-Kunststoffs, realisiert werden kann.

Bei einer ganz besonders vorteilhaften Ausführung ist die Federvorrichtung als Torsions-Federvorrichtung ausgebildet. Eine solche Ausführung kann einfach und kostengünstig hergestellt werden und kann darüber hinaus mit vergleichsweise geringem Aufwand ganz besonders robust ausgebildet werden. Beispielsweise kann die Torsions-Federvorrichtung einen elastisch tordierbaren Torsionsstab aufweisen, insbesondere kann die Torsions-Federvorrichtung aus einem elastisch tordierbaren Torsionsstab gebildet sein. Alternativ kann die Federvorrichtung eine elastisch tordierbare Hülse aufweisen, insbesondere kann die Torsions-Federvorrichtung aus einer elastisch tordierbaren Hülse gebildet sein.

Bei einer besonders zuverlässigen Ausführung ist die Federvorrichtung einstückig aus einem einzigen Stück Rohmaterial gefertigt. Es ist alternativ jedoch durchaus auch möglich, dass die Federvorrichtung aus mehreren Federvorrichtungsbauteilen zusammengesetzt ist, beispielsweise um die Federvorrichtung an vorgegebene Bauraumverhältnisse anzupassen und/oder um besondere Federeigenschaften der Federvorrichtung zu realisieren.

Beispielsweise kann die Federvorrichtung als ein Federvorrichtungsbauteil eine elastisch tordierbare Hülse aufweisen, die an einem ihrer Enden fest mit einem elastisch tordierbaren Torsionsstab verbunden ist, wobei der elastisch tordierbare Torsionsstab wenigstens teilweise innerhalb des von der elastisch tordierbaren Hülse umgebenen Raum angeordnet ist. Auf diese Weise wird vorteilhaft erreicht, dass die Federvorrichtung axial besonders kompakt ausgebildet ist, während sie gleichzeitig besonders gute Torsionseigenschaften aufweist. Insbesondere kann die Federvorrichtung als ein Federvorrichtungsbauteil eine erste elastisch tordierbare Hülse aufweisen, die an einem ihrer Enden fest mit einer zweiten elastisch tordierbaren Hülse verbunden ist, wobei die erste elastisch tordierbare Hülse wenigstens teilweise innerhalb des von der zweiten elastisch tordierbaren Hülse umgebenen Raum angeordnet ist. Auch weitere Verschachtelungen mit drei oder mehr Federvorrichtungsbauteilen sind vorteilhaft möglich.

In vorteilhafter Weise kann die Federvorrichtung als elastisch tordierbarer Faltenbalg ausgebildet sein oder einen elastisch tordierbaren Faltenbalg aufweisen.

Ganz allgemein kann vorteilhaft vorgesehen sein, dass die Federvorrichtung und das mittels der Feststellvorrichtung arretierbare Bauteil mechanisch in Reihe geschaltet sind.

Bei einer axial besonders kompakt ausbildbaren Ausführung des motorisierten Gelenks sind die Federvorrichtung und das mittels der Feststellvorrichtung arretierbare Bauteil in einer gemeinsamen, zur Axialrichtung senkrechten Ebene angeordnet sind.

Bei einer radial besonders kompakt ausbildbaren Ausführung des motorisierten Gelenks sind die Federvorrichtung und das mittels der Feststellvorrichtung arretierbare Bauteil axial voneinander beabstandet angeordnet. Insbesondere hierbei können die Federvorrichtung und das mittels der Feststellvorrichtung arretierbare Bauteil koaxial zueinander angeordnet sein.

Es ist vorteilhaft auch möglich, dass die Federvorrichtung und das mittels der Feststellvorrichtung arretierbare Bauteil axial teilweise überlappend angeordnet sind, insbesondere um eine kompakte Bauform des motorisierten Gelenks und/oder des Aktuators zu erreichen.

Bei einer besonders einfach herstellbaren Ausführung des motorisierten Gelenks sind die Federvorrichtung und das mittels der Feststellvorrichtung arretierbare Bauteil axial unmittelbar benachbart zueinander angeordnet.

Das mittels der Feststellvorrichtung arretierbare Bauteil kann beispielsweise ein Antriebskern eines Wellengenerators des Spannungswellengetriebes oder eine Abtriebswelle des Antriebsmotors, die drehfest mit dem Antriebskern des Spannungswellengetriebes verbunden ist, sein. Bei einer solchen Ausführung ist es möglich, die Träger eines programmierbaren Bewegungsautomaten, die mittels des motorisierten Gelenks miteinander verbunden sind, auch nach einem Umschalten der Feststellvorrichtung in den zugeschalteten Zustand durch Aufwendung einer äußeren Kraft in begrenztem Umfang relativ zueinander beschädigungsfrei elastisch zu bewegen, wobei das Spannungswellengetriebe zurückgetrieben wird. Wenn bei einer solchen Ausführung auf den zu bewegenden Träger eine Kraft bzw. ein Drehmoment ausgeübt wird, wirkt hiervon auf die Federvorrichtung eine um das Übersetzungsverhältnis des Getriebes reduzierte Kraft bzw. ein das Übersetzungsverhältnis des Getriebes reduziertes Drehmoment. Bei einer solchen Ausführung kann die Federvorrichtung vorteilhaft zum Ausführen eines (beispielsweise im Vergleich zu einer Ausführung, bei der das zu arretierende Bauteil ein Flexspline oder ein Circularspline oder ein Dynamicspline ist) längeren elastischen Verformungswegs und/oder eines größeren elastischen Torsionswinkels ausgebildet sein, da der Weg bzw. der Rotationswinkel des durch äußere Kraft- und/oder Drehmomenteinwirkung bewegten Trägers eine um das Übersetzungsverhältnis des Getriebes vergrößerte Bewegung des Antriebskerns des Wellengenerators und der mit dem Antriebskern drehfest verbundenen Abtriebswelle bewirkt.

Das mittels der Feststellvorrichtung arretierbare Bauteil kann alternativ beispielsweise ein Flexspline des Spannungswellengetriebes sein. Es ist auch möglich, dass das mittels der Feststellvorrichtung arretierbare Bauteil ein Circularspline oder ein Dynamicspline des Spannungswellengetriebes ist.

Das mittels der Feststellvorrichtung arretierbare Bauteil kann ganz allgemein eine Abtriebswelle des Antriebsmotors sein, unabhängig davon, mit welchem Bauteil des Spannungswellengetriebes die Abtriebswelle des Antriebsmotors triebtechnisch mittelbar oder unmittelbar verbunden ist. Insbesondere kann das mittels der Feststellvorrichtung arretierbare Bauteil ein Bauteil sein, dass direkt oder indirekt fest mit der Abtriebswelle des Antriebsmotors verbunden ist.

Hinsichtlich der Bauform des Spannungswellengetriebes gibt es keine grundsätzlichen Beschränkungen.

Das Spannungswellengetriebe kann beispielsweise als Topfgetriebe ausgebildet sein. Bei einer solchen Ausführung kann der Flexspline an einem Ende einen radial nach innen gerichteten Boden aufweisen, während das andere Ende des Flexsplines die Flexsplineverzahnung aufweist.

Das Spannungswellengetriebe kann alternativ als Hutgetriebe ausgebildet sein. Bei einer solchen Ausführung kann der Flexspline an einem Ende einen ringförmigen, radial nach außen gerichteten Kragen aufweisen, während das andere Ende des Flexsplines die Flexsplineverzahnung aufweist.

Das Spannungswellengetriebe kann alternativ als Ringgetriebe ausgebildet sein. Bei einer solchen Ausführung kann der Flexspline im Wesentlichen aus einer radialflexiblen Hülse mit einer Flexsplineverzahnung bestehen. Bei einer solchen Ausführung können ein Dynamicspline und ein Circularspline vorhanden sein, die beide jeweils eine Verzahnung aufweisen, die mit der Flexsplineverzahnung an mindestens zwei Stellen in Zahneingriff stehen.

Die Feststellvorrichtung weist ein Formschlussmittel auf, welches im zugeschalteten Zustand in formschlüssigen Eingriff mit einem Gegenformschlussmittel, beispielsweise einer Ausnehmung, steht. Beispielsweise kann das Formschlussmittel derart ausgebildet und angeordnet sein, dass es sich direkt oder indirekt an einem Gehäuse des Aktuators oder an einem der mittels des Gelenks miteinander verbundenen Träger abstützt, während das Gegenformschlussmittel drehfest mit dem zu arretierenden Bauteil verbunden ist.

Insbesondere kann das Formschlussmittel als, insbesondere linear und/oder radial, verschiebbarer Sperrenstift oder als, insbesondere schwenkbar gelagerte, Klinke ausgebildet sein. Beispielsweise kann vorgesehen sein, dass der Sperrenstift oder die Klinke elektromagnetisch bewegt wird. Dies kann beispielsweise in der Form realisiert sein, dass der Sperrenstift bzw. die Klinke permanentmagnetisch ausgebildet ist oder einen Permanentmagneten aufweist und dass die Feststellvorrichtung eine Spule aufweist, mittels der eine Kraft auf den Sperrenstift bzw. die Klinke ausübbar ist.

Bei einer besonders sicheren Ausführung wird der Sperrenstift bzw. die Klinke von einem Elektromagneten gegen die Kraft eines mechanischen Energiespeichers, beispielsweise einer Energiespeicher-Feder, in dem Freigabezustand gehalten. Bei dieser Ausführung erfolgt ein Umschalten in den zugeschalteten Zustand, indem der Elektromagnet ausgeschaltet wird, so dass der Sperrenstift bzw. die Klinke mittels der Energie des mechanischen Energiespeichers derart bewegt wird, dass er bzw. sie in Eingriff mit dem Gegenformschlussmittel kommt. Ähnliches lässt sich analog vorteilhaft auch realisieren, wenn die Feststellvorrichtung als reibschlüssige Bremse ausgebildet ist oder eine reibschlüssige Bremse aufweist. Die reibschlüssige Bremse kann, insbesondere als ein Sperrmittel, eine Bremsscheibe aufweisen. Die Bremsscheibe kann über die Federvorrichtung mit dem zu arretierenden Bauteil verbunden sein. Die reibschlüssige Bremse kann außerdem wenigstens ein Reibelement, wie beispielsweise einen Bremsklotz, aufweisen. Das Reibelement wird für einen Arretierungsvorgang mit dem Sperrmittel, beispielsweise mit einer Bremsscheibe, in Reibkontakt gebracht. Hierfür kann eine Betätigungsvorrichtung vorhanden sein, die das wenigstens eine Reibelement gegen das Sperrmittel drückt. Insbesondere kann die reibschlüssige Bremse auch derart ausgebildet sein, dass das Sperrmittel bei einem Arretierungsvorgang, insbesondere mittels der Betätigungsvorrichtung, zwischen zwei Reibelementen eingeklemmt wird.

Wie bereits erwähnt, kann das Gegenformschlussmittel als Ausnehmung ausgebildet sein. Insbesondere können mehrere Gegenformschlussmittel vorhanden sein, so dass es für das Formschlussmittel mehrere Möglichkeiten des Eingriffs gibt. Beispielsweise können mehrere Ausnehmungen auf dem Umfang oder der Stirnseite des zu arretierenden Bauteils oder des Sperrmittels, das mit dem zu arretierenden Bauteil drehfest verbunden ist, vorhanden sein.

Die Feststellvorrichtung kann, wie bereits erwähnt, auch als reibschlüssige Bremse ausgebildet sein oder eine reibschlüssige Bremse aufweisen.

Wie ebenfalls bereits erwähnt, kann die Feststellvorrichtung ein Sperrmittel aufweisen, welches das Formschlussmittel oder das Gegenformschlussmittel aufweist.

Bei einer vorteilhaften Ausführung ist das Sperrmittel über die Federvorrichtung, insbesondere unmittelbar über die Federvorrichtung, drehmomentübertragend mit dem zu arretierenden Bauteil verbunden. Beispielsweise kann das Sperrmittel reibschlüssig, insbesondere mittels eines Klemmrings, und/oder formschlüssig und/oder stoffschlüssig mit dem zu arretierenden Bauteil verbunden sein. Mittels einer reibschlüssigen Verbindung kann vorteilhaft eine Rutschkupplung realisiert sein, um den Aktuator vor einer Beschädigung durch Überlastung zu schützen.

Der Aktuator kann vorteilhaft ein Aktuatorgehäuse aufweisen. Dies hat den ganz besonderen Vorteil, dass der Aktuator innerhalb des motorisierten Gelenks gegen Verschmutzung und Beschädigung geschützt ist. Es ist insbesondere auch möglich, dass das Aktuatorgehäuse ein Teil eines Gehäuses des motorisierten Gelenks ist und/oder dass das Aktuatorgehäuse durch einen Teil eines Roboters, insbesondere eines Robotergehäuses, gebildet ist, in den das motorisierte Gelenk eingebaut ist.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, und die Ebene, in der sich der andere Träger bewegt, stets senkrecht zueinander angeordnet sind.

Insbesondere kann das Gelenk als Scharniergelenk ausgebildet sein. Unter einem Scharniergelenk wird ein Gelenk verstanden, das eine Drehbewegung in, insbesondere ausschließlich, einem Freiheitsgrad zulässt.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an ein Abtriebselement des Spannungswellengetriebes angekoppelt ist. Die zwei mittels des motorisierten Gelenks beweglich verbundenen Träger können beispielsweise Teil eines Roboterarmes sein.

Bei einer besonderen Ausführung weist das Gelenk zwei relativ zueinander bewegliche Gehäuseteile auf.

Insbesondere kann hierbei vorteilhaft vorgesehen sein, dass der Antriebsmotor in einem der Gehäuseteile angeordnet ist und das Spannungswellengetriebe in dem anderen Gehäuseteil angeordnet ist. Alternativ oder zusätzlich kann auch vorgesehen sein, dass ein Teil des Spannungswellengetriebes in einem der Gehäuseteile angeordnet ist und ein anderer Teil des Spannungswellengetriebes in dem anderen Gehäuseteil angeordnet ist, oder dass die Feststellvorrichtung in demselben Gehäuseteil angeordnet ist, wie das Spannungswellengetriebe oder wie das zu arretierende Bauteil. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente des Aktuators, insbesondere sowohl des Antriebsmotors, als auch des Spannungswellengetriebes und der Feststellvorrichtung, aufnehmen muss.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil des motorisierten Gelenks fungiert und/oder dass ein Gehäuse eines zweiten Trägers zusätzlich auch als zweites Gehäuseteil des motorisierten Gelenks fungiert.

Besonders vorteilhaft ist ein Motorisiertes Gelenk, das wenigstens einen der nachfolgend genannten Aspekte aufweist:
1. Motorisiertes Gelenk (1) zum Verbinden von zwei relativ zueinander beweglichen Trägern (2, 3) eines programmierbaren Bewegungsautomaten, das einen Aktuator (4) mit einem Antriebsmotor (5), mit einem Spannungswellengetriebe (6), das dem Antriebsmotor (5) triebtechnisch nachgeschaltet ist, und mit einer schaltbaren Feststellvorrichtung (7), die dazu ausgebildet und angeordnet ist, im zugeschalteten Zustand ein zum Antriebsstrang des Aktuators (4) gehörendes Bauteil zu arretieren und in einem Freigabezustand nicht zu arretieren, aufweist, dadurch gekennzeichnet, dass eine Federvorrichtung (13) vorhanden ist, die im zugeschalteten Zustand eine Bewegung des arretierten Bauteils gegen eine Rückstellkraft und/oder gegen ein Rückstellmoment zulässt.
2. Motorisiertes Gelenk (1) nach Aspekt 1, dadurch gekennzeichnet, dass die Federvorrichtung (13) wenigstens teilweise aus Stahl, insbesondere aus Federstahl, gefertigt ist.
3. Motorisiertes Gelenk (1) nach Aspekt 1 oder 2, dadurch gekennzeichnet, dass die Federvorrichtung (13) wenigstens teilweise aus einem Kunststoff, insbesondere aus einem Elastomer-Kunststoff, gefertigt ist.
4. Motorisiertes Gelenk (1) nach einem der Aspekte 1 bis 3 dadurch gekennzeichnet, dass die Federvorrichtung (13) als Torsions-Federvorrichtung (13) ausgebildet ist.
5. Motorisiertes Gelenk (1) nach einem der Aspekte 1 bis 4 dadurch gekennzeichnet, dass die Federvorrichtung (13) einen elastisch tordierbaren Torsionsstab oder eine elastisch tordierbare Hülse aufweist.
6. Motorisiertes Gelenk (1) nach einem der Aspekte 1 bis 5, dadurch gekennzeichnet, dass die Federvorrichtung (13) einstückig aus einem einzigen Stück Rohmaterial gefertigt ist.
7. Motorisiertes Gelenk (1) nach einem der Aspekte 1 bis 5, dadurch gekennzeichnet, dass die Federvorrichtung (13) aus mehreren Federvorrichtungsbauteilen zusammengesetzt ist.
8. Motorisiertes Gelenk (1) nach einem der Aspekte 1 bis 7, dadurch gekennzeichnet, dass die Federvorrichtung (13) und das mittels der Feststellvorrichtung (7) arretierbare Bauteil koaxial zueinander angeordnet sind.
9. Motorisiertes Gelenk (1) nach einem der Aspekte 1 bis 8, dadurch gekennzeichnet, dass die Federvorrichtung (13) und das mittels der Feststellvorrichtung (7) arretierbare Bauteil in einer gemeinsamen zur Axialrichtung senkrechten Ebene angeordnet sind.
10. Motorisiertes Gelenk (1) nach einem der Aspekte 1 bis 9, dadurch gekennzeichnet, dass die Federvorrichtung (13) und das mittels der Feststellvorrichtung (7) arretierbare Bauteil axial voneinander beabstandet oder axial aneinandergrenzend oder axial überlappend angeordnet sind.
11. Motorisiertes Gelenk (1) nach einem der Aspekte 1 bis 10, dadurch gekennzeichnet, dass das mittels der Feststellvorrichtung (7) arretierbare Bauteil ein Antriebskern (20) des Wellengenerators (21) des Spannungswellengetriebes (6) ist oder dass das mittels der Feststellvorrichtung (7) arretierbare Bauteil ein Flexspline (23) des Spannungswellengetriebes (6) ist oder dass das mittels der Feststellvorrichtung (7) arretierbare Bauteil ein Circularspline (25) oder ein Dynamicspline (24) des Spannungswellengetriebes (6) ist oder dass das mittels der Feststellvorrichtung (7) arretierbare Bauteil eine Abtriebswelle (12) des Antriebsmotors (5) ist.
12. Motorisiertes Gelenk (1) nach einem der Aspekte 1 bis 11, dadurch gekennzeichnet, dass das Spannungswellengetriebe (6) als Topfgetriebe ausgebildet ist oder dass das Spannungswellengetriebe (6) als Ringgetriebe ausgebildet ist oder dass das Spannungswellengetriebe (6) als Hutgetriebe ausgebildet ist.
13. Motorisiertes Gelenk (1) nach einem der Aspekte 1 bis 12, dadurch gekennzeichnet, dass die Feststellvorrichtung (7) ein Formschlussmittel (17) aufweist, welches im zugeschalteten Zustand in formschlüssigem Eingriff mit einem Gegenformschlussmittel steht.
14. Motorisiertes Gelenk (1) nach Aspekt 13, dadurch gekennzeichnet, dass das Formschlussmittel (17) als, insbesondere linear verschiebbarer, Sperrenstift oder als, insbesondere schwenkbar gelagerte, Klinke ausgebildet ist.
15. Motorisiertes Gelenk (1) nach Aspekt 13 oder 14, dadurch gekennzeichnet, dass das Gegenformschlussmittel (18) als Ausnehmung ausgebildet ist.
16. Motorisiertes Gelenk (1) nach einem der Aspekte 1 bis 15, dadurch gekennzeichnet, dass die Feststellvorrichtung (7) als reibschlüssige Bremse ausgebildet ist oder eine reibschlüssige Bremse aufweist, oder dass die Feststellvorrichtung (7) als reibschlüssige Bremse ausgebildet ist oder eine reibschlüssige Bremse aufweist, und über die Federvorrichtung (13) mit dem zu arretierenden Bauteil verbunden ist.
17. Motorisiertes Gelenk (1) nach einem der Aspekte 13 bis 16, dadurch gekennzeichnet, dass die Feststellvorrichtung (7) ein Sperrmittel (19) aufweist, das das Formschlussmittel (17) oder das Gegenformschlussmittel (18) aufweist und das über die Federvorrichtung (13) mit dem zu arretierenden Bauteil verbunden ist.
18. Motorisiertes Gelenk (1) nach Aspekt 17, dadurch gekennzeichnet, dass das Sperrmittel (19) reibschlüssig mit dem zu arretierenden Bauteil verbunden ist.
19. Motorisiertes Gelenk (1) nach einem der Aspekte 1 bis 18, dadurch gekennzeichnet, dass der Aktuator (4) ein Aktuatorgehäuse aufweist.
20. Motorisiertes Gelenk (1) nach einem der Aspekte 1 bis 19, dadurch gekennzeichnet, dass
   a. das motorisierte Gelenk (1) dazu ausgebildet ist, zwei Träger (2, 3) derart zu verbinden, dass die Ebene in der sich einer der Träger bewegt und die Ebene in der sich der andere Träger bewegt stets parallel zueinander angeordnet sind, oder dass
   b. das motorisierte Gelenk (1) als Scharniergelenk ausgebildet ist, oder dass
   c. das motorisierte Gelenk (1) dazu ausgebildet ist, zwei Träger (2, 3) derart zu verbinden, dass die Ebene in der sich einer der Träger bewegt und die Ebene in der sich der andere Träger bewegt stets senkrecht zueinander angeordnet sind.
21. Aktuator für ein motorisiertes Gelenk (1) nach einem der Aspekte 1 bis 20.
22. Programmierbarer Bewegungsautomat mit zwei mittels eines motorisierten Gelenks (1) nach einem der Aspekte 1 bis 20 relativ zueinander beweglich verbundenen Trägern (2, 3).
23. Programmierbarer Bewegungsautomat nach Aspekt 22, dadurch gekennzeichnet, dass einer der Träger direkt oder indirekt drehfest mit einem Stator des Antriebsmotors (5) und/oder einem Antriebsmotorgehäuse des Antriebsmotors (5) verbunden ist und dass der andere Träger drehfest an das Abtriebselement des Spannungswellengetriebes (6) angekoppelt ist.
24. Programmierbarer Bewegungsautomat nach Aspekt 22 oder 23, dadurch gekennzeichnet, dass die zwei mittels des motorisierten Gelenks (1) beweglich verbundenen Träger (2, 3) Teil eines Roboterarmes sind.
25. Programmierbarer Bewegungsautomat nach einem der Aspekte 22 bis 24, dadurch gekennzeichnet, dass das motorisierte Gelenk (1) zwei relativ zueinander bewegliche Gehäuseteile (8, 9) aufweist, wobei
   a. einer der Träger mit einem der Gehäuseteile (8, 9) fest verbunden ist und der andere Träger mit dem anderen Gehäuseteil fest verbunden ist, oder wobei
   b. eines der Gehäuseteile (8, 9) Bestandteil eines der Träger (2, 3) ist oder wobei
   c. eines der Gehäuseteile (8, 9) Bestandteil eines Gehäuses eines der Träger (2, 3) ist und das andere Gehäuseteil Bestandteil eines Gehäuses des anderen Trägers ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern,
- Fig. 2: ein zweites Ausführungsbeispiel eines motorisierten Gelenks zum Verbinden von zwei relativ zueinander befindlichen Trägern,
- Fig. 3: ein drittes Ausführungsbeispiel zum Verbinden von zwei relativ zueinander beweglichen Trägern,
- Fig. 4: ein viertes Ausführungsbeispiel eines motorisierten Gelenks zum Verbinden von zwei relativ zueinander beweglichen Trägern, und
- Fig. 5: ein fünftes Ausführungsbeispiel eines motorisierten Gelenks zum Verbinden von zwei relativ zueinander beweglichen Trägern.

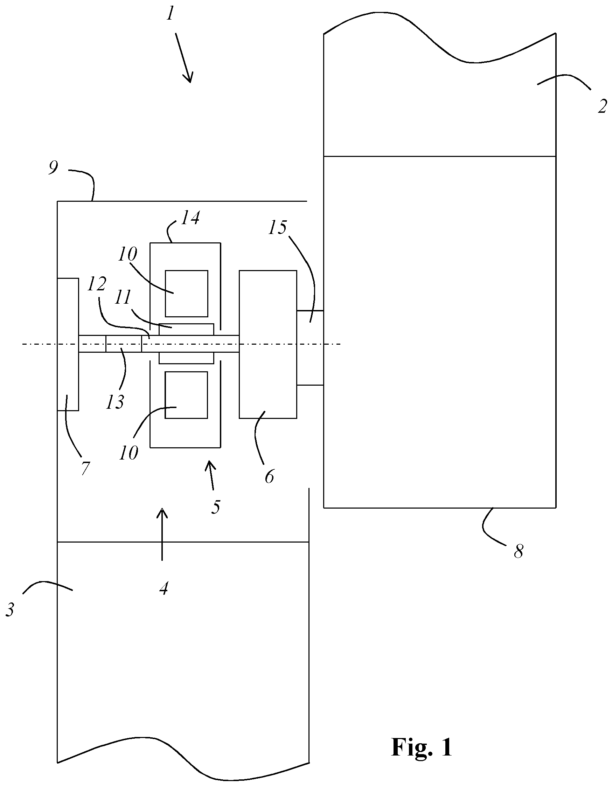

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten.

Das motorisierte Gelenk 1 weist einen Aktuator 4 mit einem Antriebsmotor 5, mit einem Spannungswellengetriebe 6, das dem Antriebsmotor 5 triebtechnisch nachgeschaltet ist, und mit einer schaltbaren Feststellvorrichtung 7, die dazu ausgebildet und angeordnet ist, im zugeschalteten Zustand ein zum Antriebsstrang des Aktuators 4 gehörendes Bauteil zu arretieren und in einem Freigabezustand nicht zu arretieren, auf.

Das motorisierte Gelenk 1 weist ein erstes Gehäuseteil 8 und ein zweites Gehäuseteil 9 auf. Das erste Gehäuseteil 8 ist starr mit dem ersten Träger 2 verbunden, während das zweite Gehäuseteil 9 starr mit dem zweiten Träger 3 verbunden ist. Es ist alternativ auch möglich, dass ein Gehäuse des ersten Trägers 2 zusätzlich auch als erstes Gehäuseteil des motorisierten Gelenks 1 fungiert und/oder dass ein Gehäuse des zweiten Trägers 3 zusätzlich auch als zweites Gehäuseteil des motorisierten Gelenks 1 fungiert.

DerAntriebsmotor5 beinhaltet einen Stator 10 und einen Rotor 11. Der Rotor 11 ist drehfest mit einer Abtriebswelle 12 verbunden. Die Abtriebswelle 12 verbindet den Antriebsmotor 5 triebtechnisch mit dem nachgeschalteten Spannungswellengetriebe 6.

Die Abtriebswelle 12 ist außerdem über eine Federvorrichtung 13 mit einer Feststellvorrichtung 7 verbunden, wobei die Federvorrichtung 13 im zugeschalteten Zustand eine Bewegung eines arretierten Bauteils, nämlich der Abtriebswelle 12, gegen eine Rückstellkraft und/oder gegen ein Rückstellmoment zulässt. In diesem Ausführungsbeispiel ist die Federvorrichtung 13 als elastisch tordierbarer Torsionsstab ausgebildet. Die Federvorrichtung 13 und das mittels der Feststellvorrichtung 7 arretierbare Bauteil (in diesem Ausführungsbeispiel: die Abtriebswelle 12) sind koaxial zueinander angeordnet.

Die Feststellvorrichtung 7 kann ein Formschlussmittel 17 (in dieser Figur nicht dargestellt) aufweisen, welches im zugeschalteten Zustand in formschlüssigem Eingriff mit einem Gegenformschlussmittel 18 (in dieser Figur nicht dargestellt) steht, und ein Sperrmittel 19 (in dieser Figur nicht dargestellt), das das Formschlussmittel 17 oder das Gegenformschlussmittel 18 aufweist. Es ist alternativ auch möglich, dass die Feststellvorrichtung 7 als reibschlüssige Bremse ausgebildet ist oder eine reibschlüssige Bremse aufweist.

Ein Antriebsmotorgehäuse 14 ist drehfest innen an dem zweiten Gehäuseteil 9 befestigt. Der Stator 10 ist ortsfest in dem Antriebsmotorgehäuse 14 angeordnet.

Ein Abtriebselement 15 des Spannungswellengetriebes 6 ist drehfest mit dem ersten Gehäuseteil 8 und somit mit dem ersten Träger 2 verbunden.

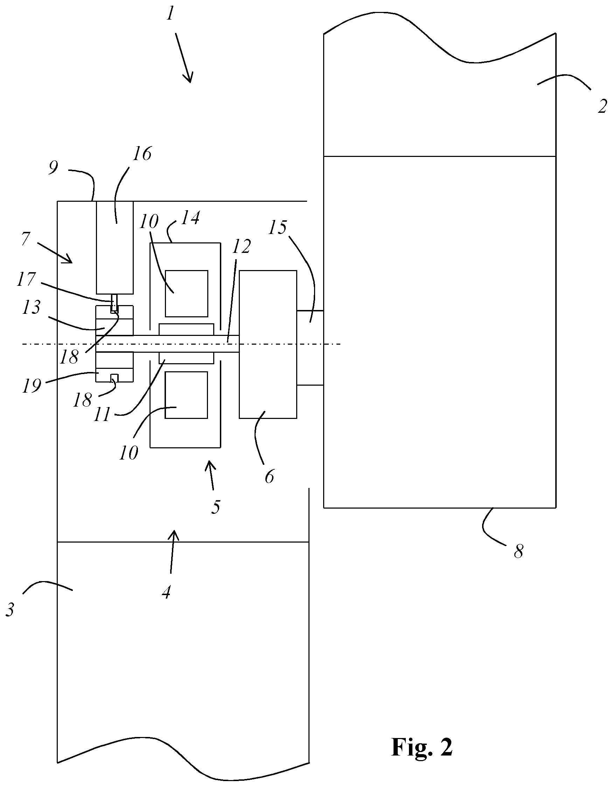

Fig. 2 zeigt ein zweites Ausführungsbeispiel eines motorisierten Gelenks 1 zum gelenkigen Verbinden eines ersten Trägers 2 mit einem zweiten Träger 3 eines programmierbaren Bewegungsautomaten.

Genauso wie bei dem ersten Ausführungsbeispiel ist die Abtriebswelle 12 über eine Federvorrichtung 13 mit einer Feststellvorrichtung 7 verbunden, wobei die Federvorrichtung 13 im zugeschalteten Zustand eine Bewegung eines arretierten Bauteils (nämlich in diesem Ausführungsbeispiel der Abtriebswelle 12) gegen eine Rückstellkraft und/oder gegen ein Rückstellmoment zulässt.

In diesem Ausführungsbeispiel ist die Federvorrichtung 13 als elastisch tordierbare Hülse ausgebildet. Die Federvorrichtung 13 und das mittels der Feststellvorrichtung 7 arretierbare Bauteil (in diesem Ausführungsbeispiel: die Abtriebswelle 12) sind koaxial zueinander und außerdem in einer gemeinsamen, zur Axialrichtung senkrechten Ebene angeordnet.

Die Feststellvorrichtung 7 weist ein mittels einer Betätigungsvorrichtung 16 linear verschiebbares Formschlussmittel 17, nämlich in diesem Ausführungsbeispiel einen radial verschiebbaren Sperrenstift, auf, welches im zugeschalteten Zustand in formschlüssigen Eingriff mit einem Gegenformschlussmittel 18, nämlich in diesem Ausführungsbeispiel einer Ausnehmung, eines drehmomentübertragend mit der Federvorrichtung 13 verbundenen Sperrmittels 19 steht. Das Sperrmittel 19 ist als Ring ausgebildet und weist auf seinem Außenumfang mehrere Gegenformschlussmittel 18, nämlich in diesem Ausführungsbeispiel Ausnehmungen, auf, so dass es für das Formschlussmittel 17 mehrere Möglichkeiten des formschlüssigen Eingriffs in das Gegenformschlussmittel 18 gibt.

Die Betätigungsvorrichtung 16 ist innen an dem zweiten Gehäuseteil 9 befestigt und stützt sich daher an dem zweiten Gehäuseteil 9 ab.

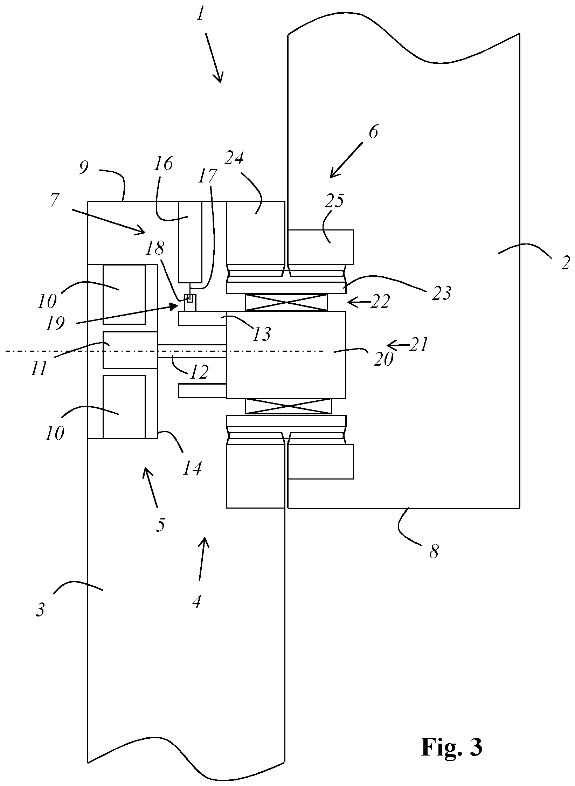

Figur 3 zeigt ein drittes Ausführungsbeispiel eines motorisierten Gelenks 1 zum gelenkigen Verbinden eines ersten Trägers 2 mit einem zweiten Träger 3 eines programmierbaren Bewegungsautomaten.

Das motorisierte Gelenk 1 weist einen Aktuator 4 mit einem Antriebsmotor 5, mit einem als Ringgetriebe ausgebildeten Spannungswellengetriebe 6, das dem Antriebsmotor 5 triebtechnisch nachgeschaltet ist, und mit einer schaltbaren Feststellvorrichtung 7, die dazu ausgebildet und angeordnet ist, im zugeschalteten Zustand ein zum Antriebsstrang des Aktuators 4 gehörendes Bauteil zu arretieren und in einem Freigabezustand nicht zu arretieren, auf.

Das motorisierte Gelenk 1 weist ein erstes Gehäuseteil 8 und ein zweites Gehäuseteil 9 auf. Das erste Gehäuseteil 8 ist bei diesem Ausführungsbeispiel Teil des Trägers 2, während das zweite Gehäuseteil 9 Teil des zweiten Trägers 3 ist.

Der Antriebsmotor 5 beinhaltet einen Stator 10 und einen Rotor 11. Der Rotor 11 ist drehfest mit einer Abtriebswelle 12 verbunden. Die Abtriebswelle 12 verbindet den Antriebsmotor 5 triebtechnisch mit dem ovalen Antriebskern 20 eines Wellengenerators 21 eines nachgeschalteten Spannungswellengetriebes 6.

Der ovalen Antriebskern 20 ist außerdem über eine Federvorrichtung 13 mit einer Feststellvorrichtung 7 verbunden, wobei die Federvorrichtung 13 im zugeschalteten Zustand der Feststellvorrichtung 7 eine Bewegung eines arretierten Bauteils (nämlich in diesem Ausführungsbeispiel der Antriebskern 20) gegen eine Rückstellkraft und/oder gegen ein Rückstellmoment zulässt. In diesem Ausführungsbeispiel ist die Federvorrichtung 13 als elastische Hülse ausgebildet. Die Federvorrichtung 13 und das mittels der Feststellvorrichtung 7 arretierbare Bauteil (in diesem Ausführungsbeispiel: der Antriebskern 20) sind koaxial und axial benachbart zueinander angeordnet.

Der Wellengenerator 21 weist ein radialflexibles Wälzlager 22 auf. Mittels des radialflexiblen Wälzlagers 22 ist der ovale Antriebskern 20 in einer radialflexiblen, außenverzahnten Hülse 23 (Flexspline) rotierbar gelagert. Der ovale Antriebskern 20 überträgt seine ovale Form über das radialflexible Wälzlager 22 auf die radialflexible außenverzahnte Hülse 23, die auf einander gegenüberliegenden Seiten entlang der Hochachse des Ovals in Zahneingriff mit einem ersten, starren, innenverzahnten Stützring 24 (Dynamicspline) steht. Der erste Stützring 24 ist über das zweite Gehäuseteil 9 drehfest mit dem zweiten Träger 3 verbunden. Der erste Stützring 24 kann insbesondere dieselbe Zähnezahl aufweisen, wie die radialflexible außenverzahnte Hülse 23.

Darüber hinaus weist das Getriebe 6 einen zweiten starren, innenverzahnten Stützring 25 (Circularspline) auf, der ebenfalls in Zahneingriff mit der radialflexiblen außenverzahnten Hülse 23 steht. Der zweite Stützring 25 weist eine höhere Anzahl von Zähnen auf, als die radialflexible außenverzahnte Hülse 23, so dass es bei einer Rotation des Antriebskerns 20 automatisch zu einer Relativdrehung des zweiten Stützrings 25 relativ zu der radialflexiblen außenverzahnten Hülse 23 kommt.

Der zweite Stützring 25, der als Getriebeabtrieb fungiert, ist mit dem ersten Gehäuseteil 8 des ersten beweglichen Trägers 2 verbunden.

Das Antriebsmotorgehäuse 14 des Antriebsmotors 5 ist drehfest an dem zweiten Gehäuseteil 9 befestigt. Der Stator 10 ist ortsfest in dem Antriebsmotorgehäuse 14 angeordnet.

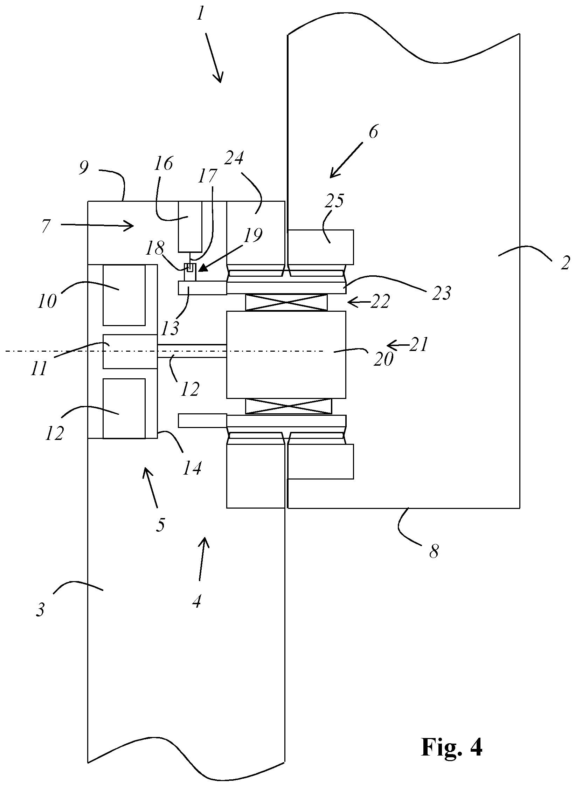

Fig. 4 zeigt ein viertes Ausführungsbeispiel eines motorisierten Gelenks 1 zum gelenkigen Verbinden eines ersten Trägers 2 mit einem zweiten Träger 3 eines programmierbaren Bewegungsautomaten.

Im Unterschied zu dem dritten Ausführungsbeispiel ist nicht der Antriebskern 20 sondern die radialflexible, außenverzahnte Hülse 23 (Flexspline) bei dem vierten Ausführungsbeispiel über eine Federvorrichtung 13 mit einer Feststellvorrichtung 7 verbunden, wobei die Federvorrichtung 13 im zugeschalteten Zustand eine Bewegung eines arretierten Bauteils (nämlich in diesem Ausführungsbeispiel: die radialflexible Hülse 23) gegen eine Rückstellkraft und/oder gegen ein Rückstellmoment zulässt.

In diesem Ausführungsbeispiel ist die Federvorrichtung 13 als elastische Hülse ausgebildet. Die Federvorrichtung 13 und das mittels der Feststellvorrichtung arretierbare Bauteil (nämlich in diesem Ausführungsbeispiel: die radialflexible Hülse 23) sind koaxial und axial unmittelbar benachbart zueinander angeordnet.

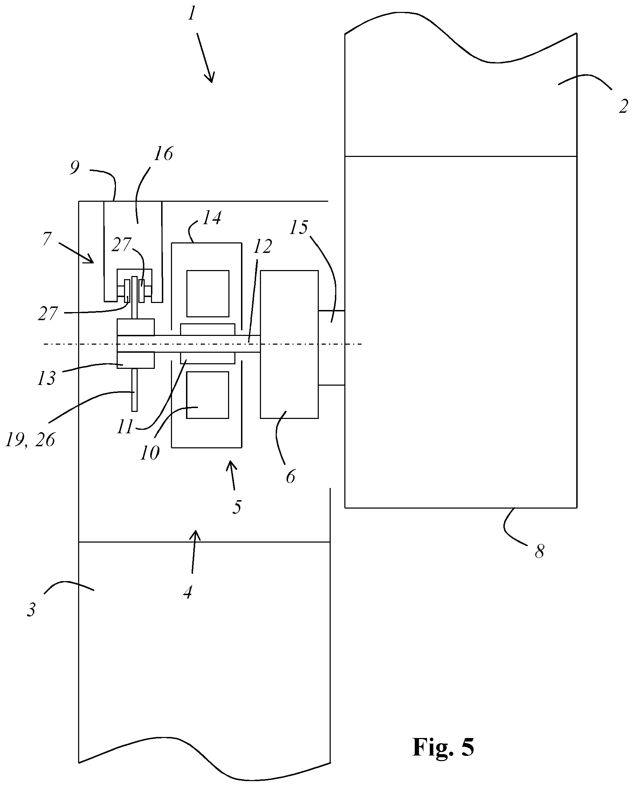

Fig. 5 zeigt ein fünftes Ausführungsbeispiel eines motorisierten Gelenks 1 zum gelenkigen Verbinden eines ersten Trägers 2 mit einem zweiten Träger 3 eines programmierbaren Bewegungsautomaten.

Genauso wie bei dem zweiten Ausführungsbeispiel ist die Abtriebswelle 12 über eine Federvorrichtung 13 mit einer Feststellvorrichtung 7 verbunden, wobei die Federvorrichtung 13 im zugeschalteten Zustand eine Bewegung eines arretierten Bauteils (nämlich in diesem Ausführungsbeispiel der Abtriebswelle 12) gegen eine Rückstellkraft und/oder gegen ein Rückstellmoment zulässt.

In diesem Ausführungsbeispiel ist die Federvorrichtung 13 als elastisch tordierbare Hülse ausgebildet. Die Federvorrichtung 13 und das mittels der Feststellvorrichtung 7 arretierbare Bauteil (in diesem Ausführungsbeispiel: die Abtriebswelle 12) sind koaxial zueinander und außerdem in einer gemeinsamen, zur Axialrichtung senkrechten Ebene angeordnet.

Die Feststellvorrichtung 7 ist bei diesem Ausführungsbeispiel als reibschlüssige Bremse ausgebildet. Die reibschlüssige Bremse weist als ein Sperrmittel 19 eine Bremsscheibe 26 auf. Die Bremsscheibe 26 ist über die Federvorrichtung 13 mit dem zu arretierenden Bauteil, nämlich der Abtriebswelle 12, verbunden. Die reibschlüssige Bremse weist außerdem zwei Reibelemente 27, nämlich vorzugsweise Bremsklötze mit jeweils einem Reibbelag, auf. Die Reibelemente 27 werden für einen Arretierungsvorgang mit dem Sperrmittel 19, nämlich mit der Bremsscheibe 26, in Reibkontakt gebracht. Hierfür ist eine Betätigungsvorrichtung 16 vorhanden, die die Reibelemente 27 für einen Arretierungsvorgang gegen die Bremsscheibe 26 drückt. Die reibschlüssige Bremse ist derart ausgebildet, dass die Bremsscheibe 26 für einen Arretierungsvorgang mittels der Betätigungsvorrichtung 16 zwischen den zwei Reibelementen 27 eingeklemmt wird.

Die Betätigungsvorrichtung 16 ist innen an dem zweiten Gehäuseteil 9 befestigt und stützt sich daher an dem zweiten Gehäuseteil 9 ab.

### Bezugszeichenliste:

- 1: Motorisiertes Gelenk
- 2: Erster Träger
- 3: Zweiter Träger
- 4: Aktuator
- 5: Antriebsmotor
- 6: Spannungswellengetriebe
- 7: Feststellvorrichtung
- 8: Erstes Gehäuseteil
- 9: Zweites Gehäuseteil
- 10: Stator
- 11: Rotor
- 12: Abtriebswelle
- 13: Federvorrichtung
- 14: Antriebsmotorgehäuse
- 15: Abtriebselement
- 16: Betätigungsvorrichtung
- 17: Formschlussmittel
- 18: Gegenformschlussmittel
- 19: Sperrmittel
- 20: Antriebskern
- 21: Wellengenerator
- 22: Radialflexibles Wälzlager
- 23: Radialflexible, außenverzahnte Hülse (Flexspline)
- 24: Erster innenverzahnter Stützring (Dynamicspline)
- 25: Zweiter innenverzahnter Stützring (Circularspline)
- 26: Bremsscheibe
- 27: Reibelement

## Patentansprüche

1. Motorisiertes Gelenk (1) zum Verbinden von zwei relativ zueinander beweglichen Trägern (2, 3) eines programmierbaren Bewegungsautomaten, das einen Aktuator (4) mit einem Antriebsmotor (5), mit einem Spannungswellengetriebe (6), das dem Antriebsmotor (5) triebtechnisch nachgeschaltet ist, und mit einer schaltbaren Feststellvorrichtung (7), die dazu ausgebildet und angeordnet ist, im zugeschalteten Zustand ein zum Antriebsstrang des Aktuators (4) gehörendes Bauteil zu arretieren und in einem Freigabezustand nicht zu arretieren, aufweist, wobeieine Federvorrichtung (13) vorhanden ist, die im zugeschalteten Zustand eine Bewegung des arretierten Bauteils gegen eine Rückstellkraft und/oder gegen ein Rückstellmoment zulässt, **dadurch gekennzeichnet, dass** die Feststellvorrichtung (7) über die Federvorrichtung (13) mit dem zu arretierenden Bauteil verbunden ist, wobei die Feststellvorrichtung (7) ein Formschlussmittel (17), welches im zugeschalteten Zustand in formschlüssigem Eingriff mit einem Gegenformschlussmittel steht, und ein Sperrmittel (19), das das Formschlussmittel (17) oder das Gegenformschlussmittel (18) aufweist, oder wobei die Feststellvorrichtung (7) als reibschlüssige Bremse ausgebildet ist oder eine reibschlüssige Bremse aufweist.

2. Motorisiertes Gelenk (1) nach Anspruch 1, **dadurch gekennzeichnet, dass** die Federvorrichtung (13) wenigstens teilweise aus Stahl, insbesondere aus Federstahl, gefertigt ist oder dass die Federvorrichtung (13) wenigstens teilweise aus einem Kunststoff, insbesondere aus einem Elastomer-Kunststoff, gefertigt ist.

3. Motorisiertes Gelenk (1) nach Anspruch 1 oder 2, **dadurch gekennzeichnet, dass**
a. die Federvorrichtung (13) als Torsions-Federvorrichtung (13) ausgebildet ist, und/oder dass
b. die Federvorrichtung (13) einen elastisch tordierbaren Torsionsstab oder eine elastisch tordierbare Hülse aufweist.

4. Motorisiertes Gelenk (1) nach einem der Ansprüche 1 bis 3, **dadurch gekennzeichnet, dass** das motorisierte Gelenk (1) wenigstens eines der folgenden Merkmale a bis c aufweist:
a. die Federvorrichtung (13) und das mittels der Feststellvorrichtung (7) arretierbare Bauteil sind koaxial zueinander angeordnet,
b. die Federvorrichtung (13) und das mittels der Feststellvorrichtung (7) arretierbare Bauteil sind in einer gemeinsamen zur Axialrichtung senkrechten Ebene angeordnet,
c. die Federvorrichtung (13) und das mittels der Feststellvorrichtung (7) arretierbare Bauteil sind axial voneinander beabstandet oder axial aneinandergrenzend oder axial überlappend angeordnet.

5. Motorisiertes Gelenk (1) nach einem der Ansprüche 1 bis 4, **dadurch gekennzeichnet, dass** das mittels der Feststellvorrichtung (7) arretierbare Bauteil ein Antriebskern (20) des Wellengenerators (21) des Spannungswellengetriebes (6) ist oder dass das mittels der Feststellvorrichtung (7) arretierbare Bauteil ein Flexspline (23) des Spannungswellengetriebes (6) ist oder dass das mittels der Feststellvorrichtung (7) arretierbare Bauteil ein Circularspline (25) oder ein Dynamicspline (24) des Spannungswellengetriebes (6) ist oder dass das mittels der Feststellvorrichtung (7) arretierbare Bauteil eine Abtriebswelle (12) des Antriebsmotors (5) ist.

6. Motorisiertes Gelenk (1) nach einem der Ansprüche 1 bis 5, **dadurch gekennzeichnet, dass** das Spannungswellengetriebe (6) als Topfgetriebe ausgebildet ist oder dass das Spannungswellengetriebe (6) als Ringgetriebe ausgebildet ist oder dass das Spannungswellengetriebe (6) als Hutgetriebe ausgebildet ist.

7. Motorisiertes Gelenk (1) nach einem der Ansprüche 1 bis 6, **dadurch gekennzeichnet, dass**
a. das Formschlussmittel (17) als, insbesondere linear verschiebbarer, Sperrenstift oder als, insbesondere schwenkbar gelagerte, Klinke ausgebildet ist, und/oder dass
b. das Gegenformschlussmittel (18) als Ausnehmung ausgebildet ist.

8. Motorisiertes Gelenk (1) nach einem der Ansprüche 1 bis 7, **dadurch gekennzeichnet, dass** das Sperrmittel (19) reibschlüssig mit dem zu arretierenden Bauteil verbunden ist.

9. Motorisiertes Gelenk (1) nach einem der Ansprüche 1 bis 8, **dadurch gekennzeichnet, dass** der Aktuator (4) ein Aktuatorgehäuse aufweist.

10. Motorisiertes Gelenk (1) nach einem der Ansprüche 1 bis 9, **dadurch gekennzeichnet, dass**
a. das motorisierte Gelenk (1) dazu ausgebildet ist, zwei Träger (2, 3) derart zu verbinden, dass die Ebene in der sich einer der Träger bewegt und die Ebene in der sich der andere Träger bewegt stets parallel zueinander angeordnet sind, oder dass
b. das motorisierte Gelenk (1) als Scharniergelenk ausgebildet ist, oder dass
c. das motorisierte Gelenk (1) dazu ausgebildet ist, zwei Träger (2, 3) derart zu verbinden, dass die Ebene in der sich einer der Träger bewegt und die Ebene in der sich der andere Träger bewegt stets senkrecht zueinander angeordnet sind.

11. Aktuator für ein motorisiertes Gelenk (1) nach einem der Ansprüche 1 bis 10.

12. Programmierbarer Bewegungsautomat mit zwei mittels eines motorisierten Gelenks (1) nach einem der Ansprüche 1 bis 10 relativ zueinander beweglich verbundenen Trägern (2, 3).

13. Programmierbarer Bewegungsautomat nach Anspruch 12, **dadurch gekennzeichnet, dass** einer der Träger direkt oder indirekt drehfest mit einem Stator des Antriebsmotors (5) und/oder einem Antriebsmotorgehäuse des Antriebsmotors (5) verbunden ist und dass der andere Träger drehfest an das Abtriebselement des Spannungswellengetriebes (6) angekoppelt ist.

14. Programmierbarer Bewegungsautomat nach Anspruch 12 oder 13, **dadurch gekennzeichnet, dass** die zwei mittels des motorisierten Gelenks (1) beweglich verbundenen Träger (2, 3) Teil eines Roboterarmes sind.

15. Programmierbarer Bewegungsautomat nach einem der Ansprüche 12 bis 14, **dadurch gekennzeichnet, dass** das motorisierte Gelenk (1) zwei relativ zueinander bewegliche Gehäuseteile (8, 9) aufweist, wobei
a. einer der Träger mit einem der Gehäuseteile (8, 9) fest verbunden ist und der andere Träger mit dem anderen Gehäuseteil fest verbunden ist, oder wobei
b. eines der Gehäuseteile (8, 9) Bestandteil eines der Träger (2, 3) ist oder wobei
c. eines der Gehäuseteile (8, 9) Bestandteil eines Gehäuses eines der Träger (2, 3) ist und das andere Gehäuseteil Bestandteil eines Gehäuses des anderen Trägers ist.
